# EUROPÄISCHE PATENTSCHRIFT

(11) **EP 3 329 481 B1**
(45) Veröffentlichungstag und Bekanntmachung des Hinweises auf die Patenterteilung: **07.11.2018**
(21) Anmeldenummer: 17783446.2
(22) Anmeldetag: 06.10.2017
(51) Int. Cl.: G08C 19/02, F02P 19/02, H04Q 9/00

(54) **VERFAHREN ZUR ÜBERTRAGUNG VON DATEN VON EINEM SENSOR ZU EINEM EMPFÄNGER**
METHOD FOR TRANSMITTING DATA FROM A SENSOR TO A RECEIVER
PROCÉDÉ DE TRANSMISSION DE DONNÉES D'UN CAPTEUR À UN RÉCEPTEUR

(30) Priorität: 20.10.2016 DE 102016220564
(43) Veröffentlichungstag der Anmeldung: 06.06.2018
(73) Patentinhaber: VOLKSWAGEN AKTIENGESELLSCHAFT, 38440 Wolfsburg (DE)
(72) Erfinder: ULRICH, Per, 38108 Braunschweig (DE); TOPCIC, Marijo, 38116 Braunschweig (DE)
(86) Internationale Anmeldenummer: PCT/EP2017/075465
(87) Internationale Veröffentlichungsnummer: WO 2018/073021

(56) Entgegenhaltungen:
- DE-A1- 10 149 332
- DE-A1- 19 829 214

## Beschreibung

Die Erfindung betrifft ein Verfahren zur Übertragung von Daten von einem Sensor zu einem Empfänger mittels einer analogen Schnittstelle.

Es ist bekannt, bei Dieselmotoren einen oder mehrere Zylinder mit Glühkerzen zu bestücken, die neben einem Glühstift einen integrierten Zylinderdrucksensor aufweisen (sogenannte PSG: "pressure sensor glow plug"). Das dem Zylinderdruck entsprechende Messsignal wird von dem Zylinderdrucksensor über eine analoge Schnittstelle (z.B. 3-Drahtschnittstelle, bestehend aus Energieversorgung, Erdung (GND) und Ausgangssignal) an das Motorsteuergerät übertragen und dient zur Regelung des Brennverlaufs. Eine solche Auswertung des Zylinderdrucks kann insbesondere zur Erreichung der Abgasnorm EU6 förderlich oder erforderlich sein.

Aus Platzgründen wird zur Kontaktierung von Glühkerze und Zylinderdrucksensor häufig ein 4-poliger, rotationssymmetrischer Koaxialstecker verwendet. Dabei existiert neben den o.g. Kontakten zur Anbindung des Zylinderdrucksensors noch ein Hochstromkontakt für die Versorgung des Glühstifts mit elektrischer Energie. Der Koaxialstecker kann aufgrund seiner Rotationssymmetrie in beliebiger Winkelausrichtung und damit im Wesentlichen ohne Sichtkontakt durch einen Monteur aufgesteckt werden. Aufgrund dieser Rotationssymmetrie weist der Koaxialstecker aber keine sogenannte Kodierung auf, so dass bei mehreren Varianten von mit dem Koaxialstecker zusammensteckbarer Glühkerzen nicht mittels mechanischer Mittel sichergestellt ist, dass auch tatsächlich eine zuvor definierte Glühkerze für den jeweiligen Einzelfall Verwendung findet. Der Einsatz einer solchen (mechanischen) Kodierung würde eine Einschränkung der Rotationssymmetrie des Koaxialsteckers bedeuten, was das Aufstecken des Koaxialsteckers in engen Bauräumen erschweren würde. Weiterhin weisen bekannte mechanisch kodierte Stecker im Vergleich zu dem genannten Koaxialstecker in der Regel deutlich größere Abmessungen auf und bedingen dadurch einen entsprechend größeren Bauraum, der im Bereich der Zylinderköpfe moderner Dieselmotoren in der Regel nicht vorhanden ist. Auch können größere Stecker die Schwingfestigkeit eines einen Zylinderdrucksensor umfassenden Messsystems verschlechtern.

Die DE 10 2005 014 133 B3 beschreibt eine integrierte Schaltung mit einer bidirektionalen Mischsignal-Eindrahtschnittstelle, über den die Schaltung von einem Wirt Kommandoinformationen empfangen kann und aufbereitete analoge Signale an den Wirt senden kann.

Die DE 101 14 504 A1 offenbart ein Verfahren zur Übertragung von Daten von wenigstens einem Sensor zu einem Steuergerät über eine Zweidrahtleitung, das dazu dient, beliebige Sensoren bei dem Steuergerät zu identifizieren und mehrere logische Kanäle über die jeweilige Zweidrahtleitung zu realisieren. Der wenigstens eine Sensor erhält von dem Steuergerät über die Zweidrahtleitung die notwendige elektrische Energie und überträgt darüber sensorspezifische Daten.

Aus der DE 101 49 332 A1 ist ein Verfahren zur Übertragung von Daten von einem Sensor zu einem Steuergerät bekannt, wobei ein Wertebereich, der zur Kodierung der zu übertragenden Daten zur Verfügung steht, in drei Teile aufgeteilt wird. Der erste Teil wird für die Sensorwerte verwendet. Der zweite Teil wird für Status- und Fehlermeldungen und der dritte Teil für Sensoridentifikationsdaten verwendet, wobei die drei Teile voneinander getrennt sind und aufeinander folgen.

Die WO 03/082613 A1 beschreibt ein Verfahren zur Identifizierung der einzelnen Reifendrucksensoren bei einem Kraftfahrzeug durch eine Steuerungsvorrichtung, wobei die Daten per Funk übertragen werden.

Der Erfindung lag die Aufgabe zugrunde, eine Möglichkeit anzugeben, bei einer Mehrzahl von unterschiedlichen, jedoch aufgrund identischer mechanischer Schnittstellen alternativ in ein System, insbesondere einen Verbrennungsmotor (z.B. Dieselmotor), integrierbaren Komponenten, insbesondere Glühkerzen mit integriertem Zylinderdrucksensor oder einem von einer Glühkerze unabhängigen Zylinderdrucksensor, eine Kodierung zu realisieren, so dass sichergestellt ist beziehungsweise überprüft werden kann, dass für den Einzelfall eine zuvor definierte Komponente aus der Mehrzahl von unterschiedlichen Komponenten zum Einsatz kommt. Dabei soll die zu realisierende Kodierung die Montage des Systems möglichst nicht erschweren und/oder den erforderlichen Bauraum möglichst nicht vergrößern.

Diese Aufgabe wird mittels eines Verfahrens gemäß dem Patentanspruch 1 gelöst. Vorteilhafte Ausführungsformen des erfindungsgemäßen Verfahrens sind Gegenstände der weiteren Patentansprüche und/oder ergeben sich aus der nachfolgenden Beschreibung der Erfindung.

Erfindungsgemäß ist ein Verfahren zur Übertragung von Daten von einem Sensor zu einem Empfänger mittels einer analogen Schnittstelle vorgesehen, wobei während eines ersten Zeitraums von dem Sensor Kennungsdaten zur Erkennung der Art des Sensors und/oder zur Erkennung der Art einer dem Sensor zugeordneten Komponente und erst nach dem ersten Zeitraum Messsignale des Sensors übertragen werden. Dabei ist weiterhin vorgesehen, dass die Übertragung der Kennungsdaten zur Identifizierung eines konkreten Sensors aus einer Gruppe von mehreren Sensoren und/oder einer konkreten, dem Sensor zugeordneten Komponente aus einer Gruppe von mehreren Komponenten dient, wobei die mehreren Sensoren der entsprechende Gruppe und/oder die mehreren Komponenten der entsprechenden Gruppe (jeweils gruppenintern) mechanisch identische Schnittstellen aufweisen und dadurch alternativ verwendbar, d.h. zumindest mit dem Empfänger koppelbar, sind.

Ein erfindungsgemäßes Verfahren eignet sich u.a. vorteilhaft zur Übertragung von Daten von einem einem Verbrennungsmotor zugeordneten Sensor, insbesondere einer Glühkerze eines Verbrennungsmotors zugeordneten Zylinderdrucksensor zu einem Empfänger, wobei dieser Empfänger insbesondere in eine Steuerungsvorrichtung, beispielsweise ein Motorsteuergerät des Verbrennungsmotors, integriert sein kann. Die Steuerungsvorrichtung kann dabei auch dafür vorgesehen sein, eine Beaufschlagung der Glühkerze, der der Zylinderdrucksensor vorzugsweise zugeordnet ist, mit einer elektrischen Versorgungsspannung zu steuern. Mittels eines solchen erfindungsgemäßen Verfahrens kann in vorteilhafter Weise vor einer Übertragung von Messsignalen des Zylinderdrucksensors mittels des Empfängers und insbesondere mittels des Motorsteuergeräts des Verbrennungsmotors erkannt werden, ob ein zuvor definiert ausgewählter Zylinderdrucksensor und insbesondere eine definiert ausgewählte, den Zylinderdrucksensor integrierende Glühkerze in dem Verbrennungsmotor auch tatsächlich verbaut ist. Eine fehlerhafte Ansteuerung des Verbrennungsmotors mit den daraus folgenden Nachteilen, insbesondere hinsichtlich Leistungsentfaltung, Kraftstoffverbrauch und Abgasemissionen, u.a. infolge von falschen Messsignalen des Zylinderdrucksensors und/oder einer falschen Ansteuerung der Glühkerze durch das Motorsteuergerät kann dadurch vermieden werden.

Beispielsweise können für gleiche oder unterschiedliche Verbrennungsmotoren, die mittels gleichen Motorsteuergeräten beziehungsweise mittels identischer auf den Motorsteuergeräten abgespeicherter Software angesteuert werden sollen, sowohl Glühkerzen mit Glühstiften aus Metall als auch Glühkerzen mit Glühstiften aus Keramik eingesetzt werden. Weil aber ein Zylinderdrucksensor typischerweise Bestandteil eines Glühstifts ist, da die Druckübertragung mechanisch über den Glühstift erfolgen soll, können Zylinderdrucksensoren umfassende Glühkerzen mit metallischen Stiften einerseits und keramischen Stiften andererseits gegebenenfalls nicht mehr applikationsneutral zueinander sein. Die genaue Erfassung des Zylinderdrucks und die darauf aufbauende Regelung des Brennverfahrens setzt somit eine Kenntnis der Art des verbauten Zylinderdrucksensors im Motorsteuergerät voraus. Dasselbe Problem kann sich bei einer Verwendung von Glühkerzen unterschiedlicher Hersteller ergeben, wenn diese hinsichtlich der Schnittstellen für die Integration in den Verbrennungsmotor mechanisch baugleich, aber nicht applikationsneutral zueinander sind. Grundsätzlich können auch metallische Glühstifte einerseits und keramische Glühstifte andererseits unterschiedliche Charakteristika (z.B. Glühverhalten - Timing, Temperatur, Widerstand) aufweisen und dadurch ebenfalls eine unterschiedliche Applizierung seitens des Motorsteuergeräts erforderlich machen. Weiterhin können Zylinderdrucksensoren unterschiedliche Druckbereiche und unterschiedliche Druckübertragungskennlinien aufweisen. Varianten können auch durch verschiedene Teilenummern oder Hardware- und Softwarestände entstehen.

In einer bevorzugten Ausführungsform eines erfindungsgemäßen Verfahrens kann vorgesehen sein, dass die Kennungsdaten ein Startsignal und/oder ein Endsignal und/oder ein Synchronisierungssignal und/oder ein Trennsignal umfassen. Auf diese Weise kann die eindeutige Identifizierung von ebenfalls mit den Kennungsdaten übertragenen Nutzdaten, die der Erkennung der Art des Sensors und/oder einer dem Sensor zugeordneten Komponente durch die Empfänger dienen, vereinfacht und/oder verbessert werden.

Weiterhin bevorzugt kann vorgesehen sein, dass die Kennungsdaten in Form einer Abfolge von zwei oder mehr Spannungssignalen mit unterschiedlichen Spannungspegeln übertragen werden, wobei die Spannungspegel identische oder unterschiedliche Längen aufweisen können und wobei unterschiedliche Abfolgen der Spannungssignale und/oder unterschiedliche große Spannungspegel und/oder unterschiedliche Längen der Spannungspegel unterschiedliche Arten von Sensoren und/oder von den Sensoren zugeordneten Komponenten definieren und folglich unterschiedlich kodierte Nutzdaten darstellen. Dies stellt einerseits eine relativ einfache Möglichkeit einer Übertragung der Kennungsdaten dar. Andererseits können sich solche Spannungssignale zudem eindeutig von typischen analogen Messsignalen eines Sensors unterscheiden, so dass die erfindungsgemäß vorgesehene Übertragung sowohl der Kennungsdaten als auch der Messsignale des Sensors über dieselbe analoge Schnittstelle vorteilhaft realisiert werden kann. Sofern die Kennungsdaten ein Startsignal und/oder ein Endsignal und/oder ein Synchronisierungssignal und/oder ein Trennsignal umfassen, kann vorgesehen sein, dass sich diese zusätzlichen Daten/Signale untereinander und/oder im Vergleich zu den Nutzungsdaten ebenfalls dadurch unterscheiden, dass diese unterschiedliche Abfolgen der Spannungssignale und/oder unterschiedliche große Spannungspegel und/oder unterschiedliche Längen der Spannungspegel aufweisen.

Um dabei weiterhin eine möglichst robuste Übertragung der Kennungsdaten zu realisieren, kann weiterhin bevorzugt vorgesehen sein, dass die Spannungspegel innerhalb eines definierten Spannungspegelbereichs einen größtmöglichen Abstand zueinander aufweisen. Dabei sollte jedoch weiterhin bevorzugt vorgesehen sein, dass die Spannungspegel beziehungsweise der Spannungspegelbereich innerhalb eines Ausgangsspannungsbereichs der Messsignale liegen, um eine Unterscheidung zwischen den übertragenen Kennungsdaten und solchen Signalen, die von dem Empfänger als Fehlermeldung aufgefasst werden könnten, zu gewährleisten. Dies kann insbesondere dann der Fall sein, wenn der Empfänger derart ausgebildet ist, dass dieser sämtliche Signale, die über die analoge Schnittstelle an diesen übertragen werden und die außerhalb des Ausgangsspannungsbereichs der Messsignale liegen, als Fehler identifiziert.

In einer weiterhin bevorzugten Ausführungsform eines erfindungsgemäßen Verfahrens, bei dem die Kennungsdaten in Form einer Abfolge von zwei oder mehr Spannungssignalen mit unterschiedlichen Spannungspegeln übertragen werden, kann vorgesehen sein, dass mindestens ein Block mit mehreren Datenbits übertragen wird, wobei ein Datenbit jeweils ein Spannungssignal oder mehrere Spannungssignale umfasst. Um dabei eine Dekodierung der Kennungsdaten zu verbessern, kann weiterhin bevorzugt vorgesehen sein, dass die Datenbits selbst kodiert sind. Hierzu kann beispielsweise eine Manchester- oder Miller-Kodierung zum Einsatz kommen.

Eine bevorzugte Weiterbildung eines solchen erfindungsgemäßen Verfahrens kann dann noch vorsehen, dass der Block mit mehreren Datenbits mehrere Unterblöcke mit jeweils mehreren Datenbits umfasst, wobei die Datenbits der Unterblöcke identisch sind oder sein können. Dies kann für eine redundante Übertragung von Kennungsdaten oder zumindest von die Erkennung der Art des Sensors und/oder einer dem Sensor zugeordneten Komponente ermöglichenden Nutzdaten genutzt werden, wodurch die Erkennungsgenauigkeit für die Kennungsdaten erhöht werden kann.

In einer weiterhin bevorzugten Ausführungsform eines erfindungsgemäßen Verfahrens kann vorgesehen sein, dass die Kennungsdaten während einer Initialisierungsphase übertragen und zum Ende der Initialisierungsphase die Übertragung der Kennungsdaten bereits beendet ist oder (zwingend) beendet wird. Dadurch kann vermieden werden, dass eine Übertragung der Messsignale, die nach dem Ende der Initialisierungsphase vorgesehen ist, durch eine andauernde Übertragung der Kennungsdaten negativ beeinflusst wird. Dabei kann weiterhin bevorzugt vorgesehen sein, dass das Ende der Initialisierungsphase erreicht ist, sobald der Sensor eine Messbereitschaft erreicht hat.

Bei der Anwendung eines solchen erfindungsgemäßen Verfahrens zur Übertragung von Daten von einem insbesondere in eine Glühkerze eines Verbrennungsmotors integrierten Zylinderdrucksensor zu einem Empfänger (z.B. Motorsteuergerät) kann weiterhin bevorzugt vorgesehen sein, dass das Ende der Initialisierungsphase erreicht ist, sobald der Zylinderdrucksensor einen Start des Verbrennungsmotors detektiert hat. Dabei kann besonders bevorzugt vorgesehen sein, dass der Start des Verbrennungsmotors anhand eines definierten Druckanstiegs in einem Brennraum, dem der Zylinderdrucksensor zugeordnet ist, ermittelt wird.

Die unbestimmten Artikel ("ein", "eine", "einer" und "eines"), insbesondere in den Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.

Die vorliegende Erfindung wird nachfolgend anhand von in den Zeichnungen dargestellten Ausführungsbeispielen näher erläutert. In den Zeichnungen zeigt:
- Fig. 1:: in schematischer Darstellung eine Kombination einer einen (Zylinderdruck-)Sensor umfassenden Komponente (Glühkerze) und eines Empfängers (Motorsteuergerät);
- Fig. 2:: eine Übertragung von Daten im Rahmen eines erfindungsgemäßen Verfahrens gemäß einer ersten Ausführungsform;
- Fig. 3:: mögliche Bitkodierungen im Rahmen eines Verfahrens gemäß der Fig. 2;
- Fig. 4:: eine Übertragung von Daten im Rahmen eines erfindungsgemäßen Verfahrens gemäß einer zweiten Ausführungsform; und
- Fig. 5:: eine Übertragung von Daten im Rahmen eines erfindungsgemäßen Verfahrens gemäß einer dritten Ausführungsform.

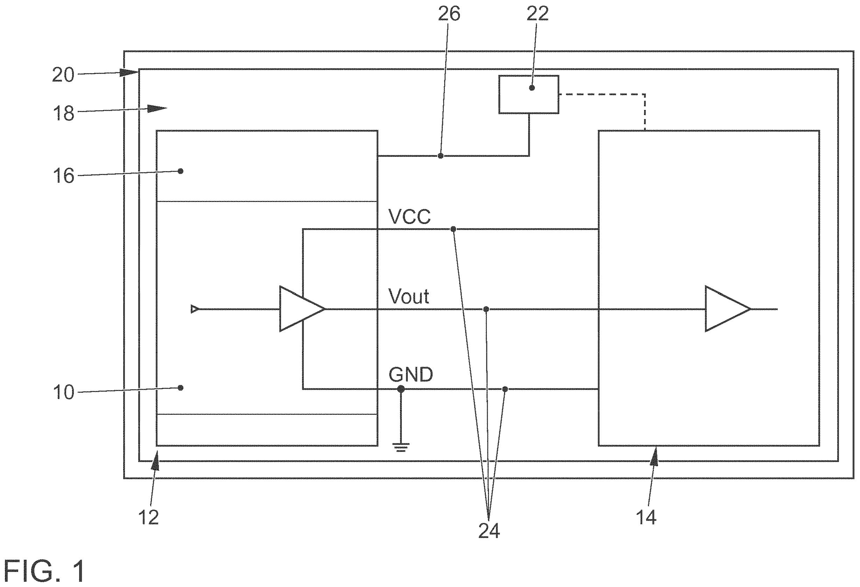

Die Fig. 1 zeigt eine Kombination einer einen Sensor 10 umfassenden Komponente 12 mit einem Empfänger 14, wobei der Sensor 10 über eine analoge Schnittstelle mit drei Leitungen 24 elektrisch leitend mit dem Empfänger 14 verbunden ist. Bei der Komponente 12 handelt es sich beispielsweise um eine Glühkerze 12 und bei dem Sensor 10 um einen Zylinderdrucksensor 10, wobei der Zylinderdrucksensor 10 zusammen mit anderen Komponenten, konkret mit einem Glühstift 16, zu der Glühkerze 12 mit integriertem Zylinderdrucksensor 10 integriert sein kann. Der Empfänger 14 ist vorzugsweise derart ausgebildet, dass dieser gleichzeitig eine Steuerungsvorrichtung darstellt beziehungsweise in eine solche integriert ist. Insbesondere wird die Funktion des Empfängers 14 von einem Motorsteuergerät 14 einer Brennkraftmaschine ausgeführt. Die Brennkraftmaschine umfasst weiterhin einen mittels des Motorsteuergeräts 14 ansteuerbaren Verbrennungsmotor 18, insbesondere Dieselmotor, wobei der Verbrennungsmotor 18 zur Bereitstellung einer Fahrantriebsleistung für ein Kraftfahrzeug 20 vorgesehen sein kann.

Mittels zwei der drei Leitungen 24 (VCC (Versorgungsleitung +) sowie GND (Erdungsleitung)) wird der Zylinderdrucksensor 10 von dem Motorsteuergerät 14 mit elektrischer Energie versorgt. Die dritte Leitung 24 (Vout) dient mit Bezug zu GND der Übertragung von Daten von dem Zylinderdrucksensor 10 zu dem Motorsteuergerät 14. Das Motorsteuergerät 14 kontrolliert die Versorgung des Zylinderdrucksensors 10 mit elektrischer Energie und wertet u.a. das analoge Messsignal des Zylinderdrucksensors 10 aus, um einen Betrieb des Verbrennungsmotors 18 in Abhängigkeit von den Messsignalen zu steuern. Eine weitere (Hochstrom-)Leitung 26 ist für eine durch das Motorsteuergerät 14 gesteuerte Übertragung von Hochstrom von einem einem separaten Leistungsausgang 22 zu dem Glühstift 16 der Glühkerze 12 vorgesehen

Eine nicht dargestellte Elektronik des in die Glühkerze 12 integrierten Zylinderdrucksensors 10 ist in der Lage, alternativ zum Messsignal des Zylinderdrucksensors 10 auch zwei oder mehr feste Spannungspegel auf der analogen Schnittstelle auszugeben. Das kann in einem analogen Ausgangspfad des Zylinderdrucksensors 10 durch eine gezielte Umschaltung auf feste Spannungswerte erfolgen. Alternativ kann bei einem intern digital arbeitenden Zylinderdrucksensor 10, bei dem die Messwerte bereits digital vorliegen und über einen Digital-Analog-Wandler auf die analoge Schnittstelle ausgegeben werden, der Digital-Analog-Wandler mit festen Eingangswerten angesteuert werden. Die so realisierten Spannungspegel erlauben die Übertragung von Informationen in digitaler Form über die analogen Schnittstelle. Diese Informationen können je nach gewählter Implementierung in Form verschiedener Spannungslevel (Amplitudenmodulation) oder bei alternativer oder auch zusätzlicher Auswertung von Umschaltflanken durch die Lage der Umschaltflanken (Phasenmodulation) übertragen werden.

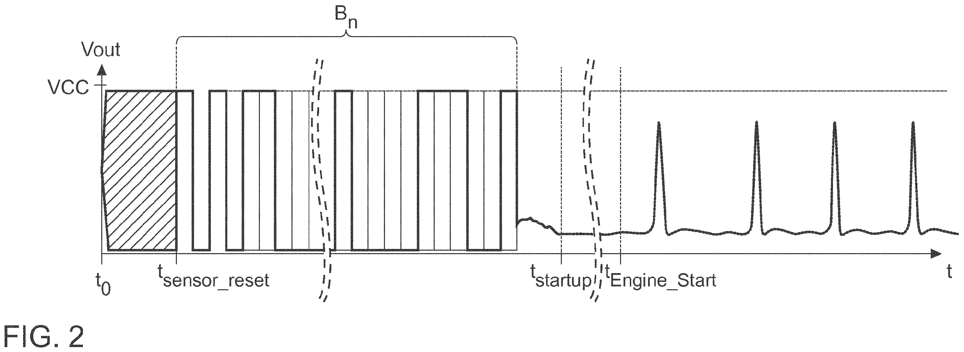

Die Übertragung zusätzlicher Informationen wird im Rahmen eines erfindungsgemäßen Verfahrens für eine Unterscheidung (Kodierung) von zumindest hinsichtlich der Schnittstellen zum Verbinden mit dem Motorsteuergerät 14 und zur Integration in einen Zylinderkopf des Verbrennungsmotors 18 baugleichen Komponenten 12 (Glühkerzen 12), die aber unterschiedliche Applikationseigenschaften besitzen, genutzt, indem entsprechend individualisierte Kennungsdaten übertragen und von dem Motorsteuergerät 14 ausgewertet werden. Hierzu wird bei einem initialen Start einer mindestens eine Kombination aus Glühkerze 12 mit Zylinderdrucksensor 10 und Motorsteuergerät 14 umfassenden Brennkraftmaschine oder eines eine solche Brennkraftmaschine umfassenden Kraftfahrzeugs 20 zuerst mittels des Motorsteuergeräts 14 an dem Zylinderdrucksensor 10 eine elektrische Versorgungsspannung angelegt und daran anschließend der Verbrennungsmotor 18 der Brennkraftmaschine gestartet. Das erfindungsgemäße Prinzip der Übertragung von Kennungsdaten beruht dabei auf der Erkenntnis, dass zumindest innerhalb eines definierten Zeitfensters t₀ bis tₛₜₐᵣₜᵤₚ (vgl. Fig. 2, 4 und 5) nach Anlegen der elektrischen Versorgungsspannung noch keine Messsignale des Zylinderdrucksensors 10 benötigt werden, weil das Motorsteuergerät 14 wartet, bis die Elektronik des Zylinderdrucksensors 10 messbereit ist und/oder erstmalig Messsignale des Zylinderdrucksensors 10 ausgewertet werden müssen. Dabei kann sich prinzipbedingt am Anfang ein minimaler Zeitraum (t₀ bis tₛₑₙₛₒᵣ_ᵣₑₛₑₜ) ohne jegliche Informationen auf der Analogschnittstelle daraus ergeben, dass der Zylinderdrucksensor 10 nach dem Einschalte der Spannungsversorgung eine Resetzeit benötigt, bis dieser überhaupt die analoge Schnittstelle ansteuern kann. Weiterhin kann das Motorsteuergerät 14 selbst Zeit für eine Initialisierung vor einem Start des Verbrennungsmotors 18 benötigen. Mit einem Start des Verbrennungsmotors 18 werden dann jedoch Messsignale des Zylinderdrucksensors 10 zwingend benötigt. Ab dem Start des Verbrennungsmotors 18 darf die analoge Schnittstelle daher nicht mehr für die Übertragung von Kennungsdaten genutzt werden.

Grundsätzlich kann in dem Zeitraum (t₀ bis t_{Engine_Start}), der zwischen dem initialen Start (gekennzeichnet durch das Anlegen einer Versorgungsspannung an den zwei hierfür vorgesehenen Leitungen 24) und dem Start des Verbrennungsmotors 18 liegt, die analoge Schnittstelle für eine Übertragung von anderen Daten als Messsignalen des Zylinderdrucksensors 10 und insbesondere für eine Übertragung von Kennungsdaten verwendet werden, ohne dass sich dadurch ein Nachteil für den Betrieb des Verbrennungsmotors 18 ergibt. Ein solcher Nachteil könnte sich nämlich einstellen, wenn eine Kollision bei der Übertragung der anderen beziehungsweise zusätzlichen Daten und der Übertragung von Messsignalen des Zylinderdrucksensors 10 auftreten würden. Erfindungsgemäß wird daher durch eine geeignete zeitliche Steuerung der Übertragung von Daten von dem Zylinderdrucksensor 10 sichergestellt, dass die Übertragung der Kennungsdaten spätestens dann beendet ist oder auch abgebrochen wird, wenn Messsignale des Zylinderdrucksensors 10 vom Motorsteuergerät 14 benötigt werden, was dann der Fall ist, wenn der Verbrennungsmotor 18 gestartet wird.

Die Übertragung von Kennungsdaten im Rahmen eines erfindungsgemäßen Verfahrens sollte hinsichtlich möglicher Übertragungsfehler und Dekodierungsfehler in einem Empfänger 14 (Motorsteuergerät) möglichst robust sein. Es sollte daher einerseits ein hoher Signalstörabstand bei der Übertragung der Kennungsdaten gewährleistet sein. Weiterhin sollte die Datenübertragung und Dekodierung im Empfänger 14 tolerant gegenüber zeitlichen Schwankungen sein (beispielsweise bedingt durch schlecht tolerierte CPU-Taktgeneratoren der Zylinderdrucksensoren 10). Die Übertragung der Kennungsdaten sollte weiterhin hinsichtlich der maximal benötigten Bandbreite und den Rechenanforderungen an die Dekodierung derart optimiert sein, dass damit auch eine Nachrüstung in Verbindung mit bestehenden Motorsteuergeräten 14 möglich ist und keine erhöhten Anforderungen an ein Bordnetz des Kraftfahrzeugs 20 gestellt werden (z.B. hinsichtlich Leitungsführung, zusätzliche Schirmung, etc.).

Nachfolgend sind anhand der Fig. 2 bis 5 verschiedene Ausführungsformen erfindungsgemäßer Verfahren beschrieben. Es sind allerdings auch Mischformen dieser Ausführungsformen möglich.

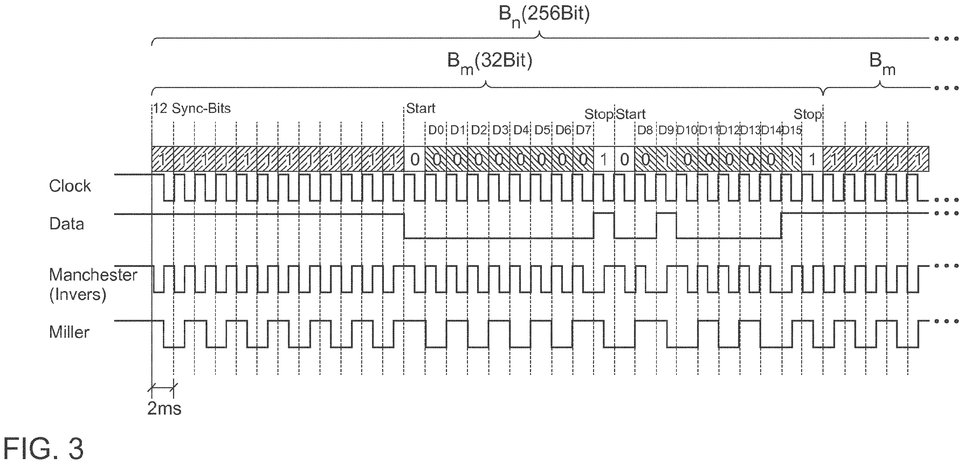

Die erste Ausführungsform (vgl. Fig. 2 und 3) realisiert eine binäre Übertragung der Kennungsdaten mit Spannungssignalen, die jeweils einen festen, im Vergleich zueinander jedoch unterschiedliche Spanungspegel aufweisen, wobei lediglich zwei definierte Spannungspegel für alle Spannungssignale vorgesehen sind. Die zwei verschiedenen Spannungspegel der Spannungssignale stehen für logisch 0 und logisch 1 (0-/1-Bits; Binärcodierung). Die Spannungssignale haben dabei eine feste definierte Länge (d.h. Zeitdauer: Erstreckung entlang der horizontalen Zeitachse in der Fig. 2). Die Spannungspegel der Spannungssignale sind zudem so gewählt, dass sie einen möglichst großen Abstand (entlang der Vertikalachse) zueinander haben, dabei jedoch noch innerhalb eines Ausgangsspannungsbereichs (0 bis VCC) liegen, innerhalb dessen (Ausgangs-)Messsignale des (Zylinderdruck-)Sensors 10 im regulären beziehungsweise fehlerfreien Betrieb liegen können. Auf diese Weise wird vermieden, dass die für die Übertragung von Kennungsdaten verwendeten Spannungssignale in Spannungsbereichen liegen, die beispielsweise einer Fehlerdiagnose dienen. Hierbei kann es sich beispielsweise um Spannungsbereiche handeln, die vom Empfänger 14 (Motorsteuergerät) als Fehlerzustand gewertet werden (z.B. Signalschluss nach Masse oder Signalschluss zur positiven Versorgungsspannung).

Der (Zylinderdruck-)Sensor selbst benötigt nach dem Anlegen der Versorgungsspannung eine Zeit (t₀ bis t_{sensor_reset}), bis er aktiv einen definierten Spannungspegel an der analogen Schnittstelle bereitstellen kann (z.B. aufgrund einer benötigten Resetzeit interner Prozessoren, etc.). Direkt danach wird mindestens ein Block Bₙ von n Datenbits ausgegeben. Eine späterer Start der Datenausgabe ist möglich, würde jedoch den für die Übertragung der Kennungsdaten zur Verfügung stehende Zeitraum verkürzen und sollte daher vorzugsweise vermieden werden. Ein Datenbit kann direkt aus einem oder mehreren 0- Spannungssignalen oder 1-Spannungssignalen oder auch aus Kombinationen von 0- Spannungssignalen und 1-Spannungssignalen bestehen. Die einzelnen Datenbits können nochmalig kodiert sein, beispielsweise mittels Manchester- oder Miller-Kodierung (vgl. Fig. 3).

Optional bestehen die n Datenbits aus einem oder mehreren Unterblöcken Bₘ zu m Datenbits, in denen die zu übertragenen Kennungsdaten, zumindest jedoch die Unterscheidungsinformationen beinhaltenden Nutzdaten jeweils enthalten sind. Durch diese Redundanz zumindest der Nutzdaten bekommt der Empfänger 14 (Motorsteuergerät) eine größere zeitliche Freiheit bei der Dekodierung der Kennungsdaten, weil dieser nicht bereits zu Beginn der Übertragung der Kennungsdaten empfangsbereit sein muss, sondern nur mindestens einen kompletten Unterblock Bₘ zu m Datenbits empfangen muss, um die gewollte Unterscheidung durchführen zu können. Weiterhin ist eine Prüfung und Fehlerkorrektur der Kennungsdaten möglich, wenn mehrere Unterblöcke Bₘ zu m Bits empfangen werden, die miteinander verglichen werden können.

Ein Unterblock Bₘ zu m Bits kann neben den eine Kennung ermöglichenden Nutzdaten zusätzliche Steuersignale, beispielsweise Start-, Stopp-, Trenn- und/oder, Synchronisationssignale beziehungsweise -bits, umfassen, um dem Empfänger 14 (Motorsteuergerät) die eindeutige Erkennung eines kompletten Unterblocks Bₘ zu m Bits im empfangenen Datenstrom zu ermöglichen.

Bis zu dem Zeitpunkt tₛₜₐᵣₜᵤₚ oder früher wird die Datenübertragung beendet und das analoge Messsignal des (Zylinderdruck-)Sensors sensorseitig auf die analoge Schnittstelle geschaltet. Dieser Zeitpunkt tₛₜₐᵣₜᵤₚ kann bei der bevorzugten Anwendung eines erfindungsgemäßen Verfahrens bei einer Kombination aus Zylinderdrucksensor 10 und Motorsteuergerät 14 vorzugsweise so gewählt sein, dass dieser zu allen vorgesehenen Fahrzeugapplikationen passt (d.h. für alle Fahrzeugapplikationen, in denen eine entsprechende Glühkerze 12 eingesetzt werden soll, gilt: bis tₛₜₐᵣₜᵤₚ werden definitiv keine Messsignale des Zylinderdrucksensors 10 vom Motorsteuergerät 14 ausgewertet oder benötigt).

Nach dem Zeitpunkt tₛₜₐᵣₜᵤₚ erfolgt dann zu dem Zeitpunkt t_{Engine_Start} der Start des Verbrennungsmotors 18. Ab diesem Zeitpunkt t_{Engine_Start} müssen die Messsignale des Zylinderdrucksensors 10 zwingend ausgewertet werden und dürfen daher nicht von einer Übertragung von Kennungsdaten beeinflusst werden.

Je nach Skalierung der Blocklänge m können ein bis beliebig viele Nutzdatenbits übertragen werden. Bei einer Kodierung eines Datenbits durch mehrere 0- und 1-Spannungspegel können separate Bitkodierungen mit mehreren Flankenwechseln / Bits realisiert werden. Durch die dann definierte Mindestanzahl an Flankenwechseln kann die Robustheit gegenüber Varianzen bei der Bitlänge erhöht werden. Der Bittakt kommt dann unabhängig vom Dateninhalt immer als Frequenzanteil im Übertragungssignal vor, der Empfänger 14 (Motorsteuergerät) kann sich dann während der gesamten Datenübertragung auf das Zeitraster der einzelnen Bits aufsynchronisieren.

Beispiele für konkrete Werte bei der Durchführung eines Verfahrens gemäß den Fig. 2 und 3:

| | |
|---|---|
| Nutzdaten (Information): | 16 Bits (rechtsschraffiert in der Fig. 3) |
| Bitanzahl m (Blocklänge Bₘ): | 32 Bits |
| Bit-Periodenlänge: | 2 ms |
| Anzahl der Wiederholungen: | 8 |
| Bitanzahl n (Blocklänge Bₙ): | 8*32 Bits = 256 Bits |
| Bitkodierung: | Miller-Code oder Manchester-Code (invers) |
| Gesamtübertragungszeit: | 2 ms * 256 = 0,512 s |

In einer bevorzugten Weiterbildung eines Verfahrens gemäß den Fig. 2 und 3 kann vorgesehen sein, dass ein Start des Verbrennungsmotors 18 mittels des Zylinderdrucksensors 10 ermittelt und diese Information als Steuergröße zum Abbruch der Übertragung der Kennungsdaten genutzt wird. Dies kann ermöglichen, den Zeitraum, der für die Übertragung der Kennungsdaten genutzt wird, bis zum Start des Verbrennungsmotors 18 (ab t_{Engine-Start}) auszudehnen, so dass dem Motorsteuergerät 14 der größtmögliche Zeitraum für den Empfang der Kennungsdaten gegeben wird. Hierfür misst die Elektronik des Zylinderdrucksensors 10 auch bei aktiver Übertragung der Kennungsdaten den Druck in dem dem Zylinderdrucksensor 10 zugeordneten Zylinder beziehungsweise Brennraum des Verbrennungsmotors 18. Ein Start des Verbrennungsmotors 18 kann dann anhand von charakteristischen Druckveränderungen in der Kompressions- und/oder Verbrennungsphase erkannt werden. Sobald der Zylinderdrucksensor 10 ein erstes eindeutiges Auftreten einer solchen Druckveränderung ermittelt hat, schaltet dieser unmittelbar die analoge Schnittstelle dauerhaft auf das analoge Messsignal um. Da ein solches Umschalten mit hoher Wahrscheinlichkeit während der Übertragung eines Blocks Bₘ zu m Bit erfolgt, sollte das Motorsteuergerät 14 so ausgeführt sein, dass es einen unvollständigen Block Bₘ erkennt und als nicht auswertbar verwirft.

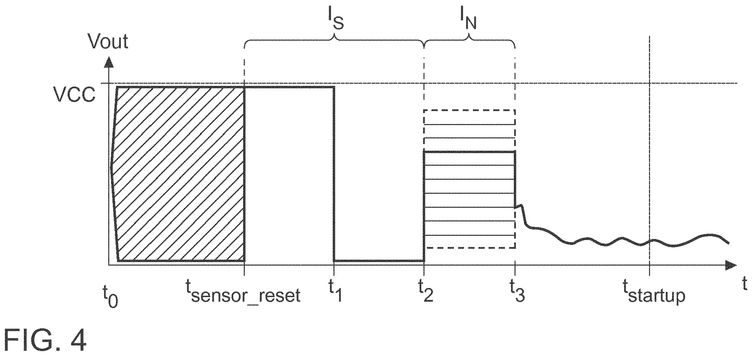

Bei einer (zweiten) Ausführungsform eines erfindungsgemäßen Verfahrens gemäß der Fig. 4 ist analog zu der ersten Ausführungsform gemäß den Fig. 2 und 3 vorgesehen, dass die Elektronik des Zylinderdrucksensors 10 an der analogen Schnittstelle eine Abfolge von definierten Spannungssignalen mit Spannungspegeln fester Zeitlänge ausgibt. Dabei sind jedoch, anders als bei der ersten Ausführungsform gemäß den Fig. 2 und 3, mehr als zwei verschiedene Spannungspegel definiert. Für die Wahl möglicher der Spannungspegel gelten die Randbedingungen wie bei der ersten Ausführungsform gelten (z.B. möglichst großer Abstand, etc.).

Im einfachsten Fall wird bei der Durchführung eines erfindungsgemäßen Verfahrens gemäß der Fig. 4 innerhalb eines Zeitintervalls (t₂ bis t₃) mindestens ein Spannungspegel aus einer Auswahl von k verschiedenen Spannungspegeln ausgegeben. Die Kodierung der Nutzdaten erfolgt hierbei amplitudenmoduliert über die Spannung (d.h. verschiedene Spannungspegel entsprechen den verschiedenen Varianten z.B. einer Glühkerze 12, etc.). Wird die Anzahl k zu 2n festgelegt, so lassen sich über eine ausgegebene Spannungsstufe log2(k) = n Bits übertragen.

Optional können auch ein oder mehrere verschiedene Spannungspegel als Startsignal I_{S} (vgl. Fig. 4), als Trennsignal zur Trennung zwischen verschiedenen Nutzdaten tragenden Spannungspegeln oder als Endsignal I_{E} übertragen werden. Ein Startsignal I_{S} und/oder ein Trennsignal kann die Robustheit der Informationsübertragung erhöhen, weil der Empfänger 14 (Motorsteuergerät) sich dadurch zeitlich aufsynchronisieren kann. Über ein Startsignal I_{S} wird dem Empfänger 14 der zeitliche Start der Datenübertragung und optional auch die Länge eines Spanungspegels kenntlich gemacht. Ein oder mehrere Trennsignale erfüllen den gleichen Zweck: sie erhöhen bei zeitlichen Schwankungen des Abtasttakts die Robustheit, weil sich der Empfänger 14 immer wieder nachsynchronisieren kann. Ein Endsignal I_{E} kann insbesondere sinnvoll sein, wenn es mehrere verschiedene (Zylinderdruck-)Sensoren 10 mit unterschiedlicher Anzahl Nutzdaten tragender Spannungspegel gibt, deren Daten an denselben Empfänger 14 (Motorsteuergerät) übertragen werden sollen.

Die eindeutige Abtastung der Nutzdaten tragenden Spannungspegel durch den Empfänger 14 (Motorsteuergerät) kann nach einer Detektion des Startsignals I_{S} zeitgesteuert erfolgen, d.h. der Empfänger kennt dann die Länge der einzelnen Spanungspegel. Optional können einzelne Spannungspegel zur Verbesserung des Signalstörabstands auch mehrfach abgetastet und im Empfänger 14 gefiltert werden.

Gemäß dem in der Fig. 4 dargestellten Ausführungsbeispiel beginnt der (Zylinderdruck-)Sensor 10 zur frühestmöglichen Zeit (t_{sensor_reset}) mit der Übertragung der Kennungsdaten. Der Zeitraum zwischen t₀ und t_{sensor_reset} stellt den Zeitraum dar, den der Sensor 10 beziehungsweise dessen Elektronik selbst benötigt, um nach Beginn seiner Versorgung mit elektrischer Versorgungsspannung sendebereit zu sein. Zwischen t_{sensor_reset} und t₁ einerseits und zwischen t₁ und t₂ andererseits werden zwei definierte, unterschiedliche Spannungspegel an der analogen Schnittstelle ausgegeben. Diese Sequenz dient als Startsignal I_{S}. Der Empfänger 10 kann die auftretende Spannungsflanke bei t₁ als Bezugszeitpunkt verwenden. Zwischen t₂ und t₃ legt der Sensor 10 an der analogen Schnittstelle einen Spannungspegel an, der den zu übertragenen Nutzdaten (z.B. Variante der Glühkerze, etc.) I_{N} entspricht. Der Empfänger tastet diesen Spannungspegel zwischen t₂ und t₃ ab. Ab t₃ werden dann ohne vorherige Übermittlung eines Endsignals Messsignale des Sensors 10 von der Elektronik des Sensors 10 auf die analoge Schnittstelle geschaltet.

Es besteht auch bei diesem Ausführungsbeispiel die Möglichkeit, die Nutzdaten I_{N}, die in dem ausgewählten Spannungspegel, der zwischen t₂ und t₃ übertragen wird, definiert sind, mehrfach zu übertragen, wobei dann vorzugsweise vorgesehen sein sollte, zwischen diesen identischen Nutzdaten-Spannungspegeln ein Trennsignal zu übertragen (nicht dargestellt), um für den Empfänger 14 die Redundanz der Übertragung der Nutzdaten I_{N} eindeutig erkenntlich zu machen.

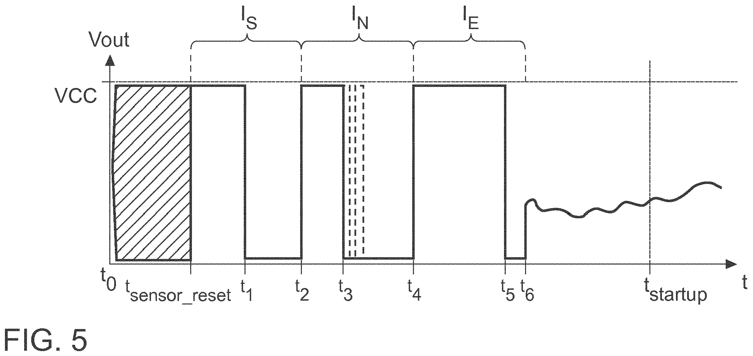

Bei einer (dritten) Ausführungsform eines erfindungsgemäßen Verfahrens gemäß der Fig. 5 ist analog zu der zweiten Ausführungsform gemäß der Fig. 4 vorgesehen, die Übertragung der Nutzdaten I_{N} (hier zwischen t₂ und t₄) nach einer vorausgegangenen Übertragung eines Startsignals I_{S} (zwischen t_{sensor_reset} und t₂) durchzuführen. Anders als bei der zweiten Ausführungsform gemäß der Fig. 4 ist jedoch zusätzlich die Übertragung eines Endsignals I_{E} im Anschluss an die Übertragung der Nutzdaten I_{N} vorgesehen. Dabei werden insgesamt für die Übertragung des Startsignals I_{S}, der Nutzdaten I_{N} und des Endsignals I_{E} nur zwei verschiedene Spannungspegel für logisch 1 und logisch 0 verwendet (0-/1-Bits; Binärcodierung). Für die Wahl möglicher der Spannungspegel gelten die Randbedingungen, wie sie für die erste Ausführungsform beschrieben worden sind (z.B. möglichst großer Abstand, etc.).

Für die Übertragung der Nutzdaten I_{N} dient ein Zeitintervall zwischen t₂ und t₄ mit mindestens einem (variablen) Wechsel des Signalpegels innerhalb dieses Zeitintervalls. Die Kodierung der Nutzdaten erfolgt hierbei phasenmoduliert über die Phasenlage des Pegelwechsels innerhalb dieses Zeitintervalls (ähnlich einem PWM-Signal).

Bei dieser Ausführungsform vermisst der Empfänger 14 folglich den Flankenwechsel innerhalb eines zur Übertragung der Nutzdaten I_{N} genutzten Zeitintervalls (zwischen t₂ und t₄) und setzt diesen in Bezug zur Gesamtlänge dieses Zeitintervalls . Ein Startsignal I_{S} wird analog zur zweiten Ausführungsform gemäß der Fig. 4 verwendet, damit der Empfänger 14 den Startzeitpunkt des zur Übertragung für die Nutzdaten I_{N} genutzten Zeitintervalls (zwischen t₂ und t₄) eindeutig bestimmen kann. Die in der Fig. 5 gezeigte Übertragung eines Startsignals I_{S} sollte insbesondere immer dann durchgeführt werden, wenn das oder die zur Übertragung der Nutzdaten I_{N} vorgesehenen Zeitintervalle nicht exakt definiert und dem Empfänger bekannt sind, um das Ende des (letzten) Nutzdaten I_{N} tragenden Zeitintervalls eindeutig zu kennzeichnen. Das Startsignal I_{S} und gegebenenfalls das Endsignal I_{E} sollten sich eindeutig von den zur Übertragung der Nutzdaten I_{N} vorgesehenen Spannungssignalen unterscheiden, um eine Unterscheidung gewährleisten zu können.

Bei dem in der Fig. 5 dargestellten Ausführungsbeispiel erfolgt eine Übertragung des Startsignals I_{S} analog zu der zweiten Ausführungsform gemäß der Fig. 4 im Zeitintervall zwischen t_{sensor_reset} und t₂. Ab der folgenden steigenden Flanke zum Zeitpunkt t₂ beginnt ein Nutzdaten I_{N} übertragenes Zeitintervall (t₂ bis t₄). In diesem Zeitintervall werden die sich anschließende fallende Flanke des Signalverlaufs und die darauf folgende steigende Flanke ausgewertet, um die Nutzdaten I_{N} zu dekodieren. An das Nutzdaten I_{N} übertragende Zeitintervall (t₂ bis t₄) schließt sich ein Zeitintervall (t₄ bis t₆) an, innerhalb dessen das Endsignal I_{E} übertragen wird. Auch dieses setzt sich aus den zwei unterschiedlichen Spannungspegeln zusammen, wobei diese jedoch ein Längenverhältnis aufweisen, welches nicht für die Kodierung der Nutzdaten I_{N} (und vorzugsweise auch nicht für das Startsignal I_{S}) vorgesehen ist.

Auf diese Weise kann das Endsignal I_{E} bei mehreren redundant übertragenen Nutzdaten I_{N} (jeweils gemäß einem Vorgehen in dem Zeitintervall t₂ bis t₄) eindeutig erkannt werden.

Die Ausführungsformen gemäß den Fig. 4 und 5 sind relativ einfach in der Umsetzung. Hinsichtlich der Datenübertragung bieten sie jedoch nur einen begrenzten Informationsgehalt, weil die Anzahl der Modulationszustände für eine Amplitudenmodulation (primär in der zweiten Ausführungsform gemäß der Fig. 4) oder eine Phasenmodulation (primär in der dritten Ausführungsform gemäß der Fig. 5) durch den erforderlichen Signalstörabstand begrenzt ist. Bei der Phasenmodulation gemäß der dritten Ausführungsform ergeben sich gegebenenfalls zusätzliche Einschränkungen infolge einer relativ geringen Bandbreite des Übertragungskanals, weil dadurch die zeitliche Genauigkeit der Flankenauswertung verringert wird.

Hinsichtlich der Robustheit bezüglich der Amplitudenmodulation ist eine binäre Übertragung von nur zwei Spannungspegeln entsprechend der ersten und dritten Ausführungsform optimal, weil dadurch ein größtmöglicher Abstand für die genutzten Spannungspegel eingestellt werden kann. Die Übertragung einer definierten Anzahl Bits konstanter Länge gemäß der ersten Ausführungsform stellt weiterhin geringere Anforderungen an die Phasenlage der Abtastzeitpunkte, an denen die Informationen abgetastet werden müssen (idealerweise in der Bitmitte). Werden bei der Verwendung einer Manchester- oder Miller-Kodierung die Flanken ausgewertet (vgl. Fig. 3), müssen nur wenige verschiedene Puls-Pausen-Verhältnisse unterschieden werden. Daher ist die Anforderung an die zeitliche Genauigkeit der Flankenerkennung bei der ersten Ausführungsform gemäß den Fig. 2 und 3 deutlich geringer als bei der dritten Ausführungsform gemäß der Fig. 5. Aus diesen Gründen kann zumindest bei einer Verwendung eines erfindungsgemäßen Verfahrens zur Übertragung von Daten von Glühkerzen 12 zugeordneten Zylinderdrucksensoren 10 an einen Empfänger 14 die erste Ausführungsform gemäß den Fig. 2 und 3 bevorzugt eingesetzt werden. Die Definition eines Datencontainers für die Nutzdaten I_{N} erlaubt dabei auch eine einfachere Standardisierung der Variantenkennung über viele verschiedene Zylinderdrucksensoren 10 hinweg. Zusätzlich können in den Datencontainern Bits für Fehlererkennung- und Fehlerkorrektur reserviert werden (CRC-Codierung der Information).

### Bezugszeichenliste

- 10: (Zylinderdruck-)Sensor
- 12: Komponente / Glühkerze
- 14: Empfänger/ Motorsteuergerät
- 16: Glühstift
- 18: Verbrennungsmotor
- 20: Kraftfahrzeug
- 22: Leistungsausgang
- 24: Leitung der analogen Schnittstelle
- 26: (Hochstrom-)Leitung
- Bₙ: Block mit n Bits
- Bₘ: Unterblock mit m Bits
- I_{S}: Startsignal
- I_{N}: Nutzdaten
- I_{E}: Endsignal

## Patentansprüche

1. Verfahren zur Übertragung von Daten von einem Sensor (10) zu einem Empfänger (14) mittels einer analogen Schnittstelle, wobei während eines ersten Zeitraums von dem Sensor (10) Kennungsdaten zur Erkennung der Art des Sensors (10) und/oder einer dem Sensor (10) zugeordneten Komponente (12) und nach dem ersten Zeitraum Messsignale des Sensors (10) übertragen werden, **gekennzeichnet durch** die Identifizierung eines konkreten Sensors (10) und/oder einer konkreten, dem Sensor (10) zugeordneten Komponente (12) aus einer Gruppe von mehreren Sensoren (10) und/oder einer Gruppe von mehreren Komponenten (12), wobei die mehreren Sensoren (10) der entsprechenden Gruppe und/oder die mehreren Komponenten (12) der entsprechenden Gruppe mechanisch identische Schnittstellen aufweisen.

2. Verfahren gemäß Anspruch 1, **dadurch gekennzeichnet, dass** die Kennungsdaten ein Startsignal und/oder ein Endsignal und/oder ein Synchronisierungssignal und/oder ein Trennsignal umfassen.

3. Verfahren Anspruch 1 oder 2, **dadurch gekennzeichnet, dass** die Kennungsdaten in Form einer Abfolge von zwei oder mehr Spannungssignalen mit unterschiedlichen Spannungspegeln übertragen werden, wobei die Spannungspegel eine identische oder unterschiedliche Länge aufweisen können und wobei unterschiedliche Abfolgen der Spannungssignale und/oder unterschiedliche große Spannungspegel und/oder unterschiedliche Längen der Spannungspegel unterschiedliche Arten von Sensoren (10) und/oder von den Sensoren (10) zugeordneten Komponenten (12) definieren.

4. Verfahren gemäß Anspruch 3, **dadurch gekennzeichnet, dass** die Spannungspegel innerhalb eines definierten Spannungspegelbereichs einen größtmöglichen Abstand zueinander aufweisen.

5. Verfahren gemäß einem der Ansprüche 3 oder 4, **dadurch gekennzeichnet, dass** die Spannungspegel innerhalb eines Ausgangsspannungsbereichs der Messsignale liegen.

6. Verfahren gemäß einem der Ansprüche 3 bis 5, **dadurch gekennzeichnet, dass** mindestens ein Block (Bₘ, Bₙ) mit mehreren Datenbits übertragen wird, wobei ein Datenbit ein oder mehrere Spannungssignale umfasst.

7. Verfahren gemäß Anspruch 6, **dadurch gekennzeichnet, dass** die Datenbits kodiert sind.

8. Verfahren gemäß Anspruch 6 oder 7, **dadurch gekennzeichnet, dass** der Block (Bₙ) mit mehreren Datenbits mehrere Unterblöcke (Bₘ) mit jeweils mehreren Datenbits umfasst, wobei die Datenbits der Unterblöcke (Bₘ) identisch sind.

9. Verfahren gemäß einem der vorhergehenden Ansprüche, **dadurch gekennzeichnet, dass** die Kennungsdaten während einer Initialisierungsphase übertragen und zum Ende der Initialisierungsphase die Übertragung der Kennungsdaten bereits beendet ist oder beendet wird.

10. Verfahren gemäß Anspruch 9, **dadurch gekennzeichnet, dass** das Ende der Initialisierungsphase erreicht ist, sobald der Sensor (10) eine Messbereitschaft erreicht hat.

11. Verfahren gemäß einem der vorhergehenden Ansprüche, **gekennzeichnet durch** eine Übertragung von Daten von einem insbesondere einer Glühkerze (12) eines Verbrennungsmotors (18) zugeordneten Zylinderdrucksensor (10) zu dem Empfänger (14).

12. Verfahren gemäß Anspruch 10 und 11, **dadurch gekennzeichnet, dass** das Ende der Initialisierungsphase erreicht ist, sobald der Zylinderdrucksensor (10) einen Start des Verbrennungsmotors (18) detektiert hat.

13. Verfahren gemäß Anspruch 12, **dadurch gekennzeichnet, dass** der Start des Verbrennungsmotors (18) anhand eines definierten Druckanstiegs in einem Brennraum, dem der Zylinderdrucksensor (10) zugeordnet ist, ermittelt wird.

## Claims

1. Method for transmitting data from a sensor (10) to a receiver (14) by means of an analogue interface, wherein identification data for identifying the type of sensor (10) and/or a component (12) assigned to the sensor (10) are transmitted by the sensor (10) during a first period and measurement signals from the sensor (10) are transmitted after the first period, **characterized by** the identification of a specific sensor (10) and/or a specific component (12) assigned to the sensor (10) from a group of a plurality of sensors (10) and/or a group of a plurality of components (12), wherein the plurality of sensors (10) in the corresponding group and/or the plurality of components (12) in the corresponding group have mechanically identical interfaces.

2. Method according to Claim 1, **characterized in that** the identification data comprise a start signal and/or an end signal and/or a synchronization signal and/or a disconnect signal.

3. Method according to Claim 1 or 2, **characterized in that** the identification data are transmitted in the form of a sequence of two or more voltage signals having different voltage levels, wherein the voltage levels can have an identical length or a different length, and wherein different sequences of the voltage signals and/or different voltage levels and/or different lengths of the voltage levels define different types of sensors (10) and/or components (12) assigned to the sensors (10).

4. Method according to Claim 3, **characterized in that** the voltage levels have the largest possible spacing with respect to one another within a defined voltage level range.

5. Method according to either of Claims 3 and 4, **characterized in that** the voltage levels are within an output voltage range of the measurement signals.

6. Method according to one of Claims 3 to 5, **characterized in that** at least one block (Bₘ, Bₙ) having a plurality of data bits is transmitted, wherein a data bit comprises one or more voltage signals.

7. Method according to Claim 6, **characterized in that** the data bits are coded.

8. Method according to Claim 6 or 7, **characterized in that** the block (Bₙ) having a plurality of data bits comprises a plurality of sub-blocks (Bₘ) having a plurality of data bits in each case, wherein the data bits in the sub-blocks (Bₘ) are identical.

9. Method according to one of the preceding claims, **characterized in that** the identification data are transmitted during an initialization phase and the transmission of the identification data has already been completed or is completed at the end of the initialization phase.

10. Method according to Claim 9, **characterized in that** the end of the initialization phase is reached as soon as the sensor (10) has reached a readiness for measurement.

11. Method according to one of the preceding claims, **characterized by** transmission of data from a cylinder pressure sensor (10), assigned in particular to a glow plug (12) of an internal combustion engine (18), to the receiver (14).

12. Method according to Claims 10 and 11, **characterized in that** the end of the initialization phase is reached as soon as the cylinder pressure sensor (10) has detected a start of the internal combustion engine (18).

13. Method according to Claim 12, **characterized in that** the start of the internal combustion engine (18) is determined on the basis of a defined pressure rise in a combustion chamber to which the cylinder pressure sensor (10) is assigned.

## Revendications

1. Procédé de transmission de données d'un capteur (10) à un récepteur (14) au moyen d'une interface analogique, des données d'identification destinées à identifier le type du capteur (10) et/ou d'un composant (12) associé au capteur (10) étant transmises par le capteur (10) pendant une première période et des signaux de mesure du capteur (10) étant transmis après la première période, **caractérisé par** l'identification d'un capteur (10) concret et/ou d'un composant (12) concret associé au capteur (10) à partir d'un groupe de plusieurs capteurs (10) et/ou d'un groupe de plusieurs composants (12), les plusieurs capteurs (10) du groupe correspondant et/ou les plusieurs composants (12) du groupe correspondant possédant des interfaces mécaniquement identiques.

2. Procédé selon la revendication 1, **caractérisé en ce que** les données d'identification comportent un signal de début et/ou un signal de fin et/ou un signal de synchronisation et/ou un signal de séparation.

3. Procédé selon la revendication 1 ou 2, **caractérisé en ce que** les données d'identification sont transmises sous la forme d'une séquence d'au moins deux signaux de tension ayant des niveaux de tension différents, les niveaux de tension pouvant présenter une longueur identique ou différente et des séquences différentes de signaux de tension et/ou des niveaux de tension de différentes tailles et/ou des longueurs différentes des niveaux de tension définissant des types différents de capteurs (10) et/ou de composants (12) associés aux capteurs (10).

4. Procédé selon la revendication 3, **caractérisé en ce que** les niveaux de tension présentent un écart maximal entre eux au sein d'une plage de niveaux de tension définie.

5. Procédé selon l'une des revendications 3 ou 4, **caractérisé en ce que** les niveaux de tension se trouvent à l'intérieur d'une plage de tensions de sortie.

6. Procédé selon l'une des revendications 3 à 5, **caractérisé en ce qu'**au moins un bloc (Bₘ, Bₙ) comprenant plusieurs bits de données est transmis, un bit de données comprenant un ou plusieurs signaux de tension.

7. Procédé selon la revendication 6, **caractérisé en ce que** les bits de données sont codés.

8. Procédé selon la revendication 6 ou 7, **caractérisé en ce que** le bloc (Bₙ) comprenant plusieurs bits de données comporte plusieurs sous-blocs (Bₘ) comprenant respectivement plusieurs bits de données, les bits de données des sous-blocs (Bₘ) étant identiques.

9. Procédé selon l'une des revendications précédentes, **caractérisé en ce que** les données d'identification sont transmises pendant une phase d'initialisation et la transmission des données d'identification est déjà terminée ou prend fin à la fin de la phase d'initialisation.

10. Procédé selon la revendication 9, **caractérisé en ce que** la fin de la phase d'initialisation est atteinte dès que le capteur (10) a atteint un état prêt pour la mesure.

11. Procédé selon l'une des revendications précédentes, **caractérisé par** une transmission de données depuis un capteur de pression de cylindre (10), notamment associé à une bougie d'allumage (12) d'un moteur à combustion interne (18), au récepteur (14).

12. Procédé selon la revendication 10 et 11, **caractérisé en ce que** la fin de la phase d'initialisation est atteinte dès que le capteur de pression de cylindre (10) a détecté un démarrage du moteur à combustion interne (18).

13. Procédé selon la revendication 12, **caractérisé en ce que** le démarrage du moteur à combustion interne (18) est déterminé à l'aide d'une augmentation de pression définie dans une chambre de combustion à laquelle est associé le capteur de pression de cylindre (10) .
